# EUROPEAN PATENT APPLICATION

(11) **EP 4 765 330 A1**
(43) Date of publication of application: **24.06.2026**
(21) Application number: 25214920.8
(22) Date of filing: 11.11.2025
(51) Int. Cl.: H01M 10/613, H01M 10/625, H01M 10/6551, H01M 10/6557, H01M 10/6561, H01M 10/627, H01M 10/647, H01M 10/6563

(54) **SECONDARY BATTERY MODULE, HEAT DISSIPATION STRUCTURE FOR SECONDARY BATTERY MODULE, AND SECONDARY BATTERY PACK**

(30) Priority: 18.12.2024 KR 20240190602
(71) Applicant: SAMSUNG SDI CO., LTD., Yongin-si, Gyeonggi-do 17084 (KR)
(72) Inventor: LEE, Eunkang, 17084 Yongin-si, Gyeonggi-do (KR)
(74) Representative: Gulde & Partner

(57) **Abstract**

A secondary battery module (30) includes: a module case (31) having an inflow passage (31a) and an outflow passage (31c) configured to allow air to pass therethrough; a plurality of battery cells (15) in the module case (31); and a heat dissipation structure (40) in close contact with at least one of the battery cells (15) and configured to cool the at least one of the battery cells (15) through heat exchange with air passing through the module case (31).

## Description

### BACKGROUND

### 1. Field

The present disclosure relates to a secondary battery module, a heat dissipation structure for a secondary battery module, and a secondary battery pack.

### 2. Description of the Related Art

Secondary batteries are batteries that are designed to be charged and discharged, different from primary batteries that are designed to be (re)charged. Generally, a secondary battery includes an electrode assembly including (or formed of) positive and negative electrode plates, a case accommodating the electrode assembly, an electrode terminal connected to the electrode assembly, a vent for degassing excess gas generated inside the case, and the like. Recently, secondary batteries are being used for driving motors in hybrid vehicles, electric vehicles, and the like and for power storage (e.g., home and utility scale power storage) and are increasing in capacity.

Because secondary battery packs in which a plurality of modules (e.g., battery modules) operate simultaneously generate a large amount of heat during operation, heat dissipation is an important design factor. Various cooling technologies for efficiently cooling a secondary battery pack are known, including a water-cooling method that circulates coolant.

However, a water-cooling method risks water leakage when used for a long time or exposed to continuous vibrations.

The above information disclosed in this Background section is for enhancement of understanding of the background of the present disclosure, and therefore, it may contain information that does not constitute a related (or prior) art.

### SUMMARY

The present disclosure provides a cooling technology for maintaining cooling capability even after a long time of use and irrespective of vibrations.

An aspect of the present disclosure is directed to a heat dissipation structure for a secondary battery module. The heat dissipation structure includes a heat receiving part adapted to be in close contact with a battery cell inside a module case forming a secondary battery module. The heat receiving part is configured to receive heat of the battery cell. The heat dissipation structure includes a heat dissipation unit formed integrally with the heat receiving part and configured to radiate heat from the heat receiving part to air.

Another aspect of the present disclosure is directed to a secondary battery module. The secondary battery module includes a module case having an inflow passage and an outflow passage configured to allow air to pass therebetween, a plurality of battery cells in the module case, and a heat dissipation structure in close contact with at least one of the battery cells and configured to cool the at least one of the battery cells through heat exchange with the air passing through the module case. The heat dissipation structure may be the heat dissipation structure of aspect of the invention.

According to yet another aspect of the present disclosure, a secondary battery pack includes a pack housing including an inlet and an outlet and a secondary battery module. The secondary battery module is the secondary battery module of the other aspect of the disclosure.

The following possible embodiments of the heat dissipation structure can be combined as desired.

The heat dissipation structure may comprise a support configured to be in surface contact with a support of an adjacent heat dissipation structure. An advantage of this embodiment may be that the supports keep the heat dissipation structures at a distance to each other providing for a channel between the heat dissipation structures for cooling air.

The heat dissipation structure may comprise an elastically deformable conductive elastic pad. The elastically deformable conductive elastic pad may be provided between the heat receiving part and the battery cell. The elastically deformable conductive elastic pad may be arranged on a side of the heat receiving part that faces away from or is arranged opposite to the heat dissipation unit. The elastically deformable conductive elastic pad may have an thermal conductivity at least as high as the thermal conductivity of the heat receiving part and/or may be a cooling pad comprising for example a phase change material and/or an organic salt compound An advantage of this embodiment may be that the heat transfer to the heat dissipation structure may be improved.

The heat dissipation structure may comprise an elastic support between the heat dissipation structure between neighboring ones of the battery cells. The elastic support may be configured to elastically support the heat dissipation structure toward the battery cell. The elastic support may be arranged on a side of the heat receiving part that faces away from the heat receiving part. The elastic support may be a spring, e.g. a coil spring or a helical spring. An advantage of this embodiment may be that vibrations, e.g. caused by a vehicle that comprises a battery with the heat dissipation structure while driving are lessened.

The heat receiving part may have a heat transfer body contact neighboring ones of the battery cells. The heat transfer body may provide or comprise a passage configured to allow air to pass therethrough. An advantage of this embodiment may be that two neighboring battery cells can be cools with one heat dissipation structure.

The heat dissipation unit may have a heat dissipation fin inside the air passage. The heat dissipation fin may be configured to receive heat of the heat receiving part to give off the heat to air, e.g. by radiation and/or conduction. An advantage of this embodiment may be that cooling is further improved.

The following possible embodiments of the secondary battery module can be combined as desired.

The heat dissipation structure may comprise a heat receiving part that may be arranged in close contact with the at least one of the battery cells. The heat receiving part may be configured to receive heat from the at least one of the battery cells. The heat dissipation structure may comprise a heat dissipation unit. The heat dissipation unit may be formed integrally with the heat receiving part. The heat dissipation unit may be configured to exchange heat with air passing through the module case. An advantage of this embodiment may be that heat is efficiently conducted away from the battery cell.

The secondary battery module may comprise an elastically deformable conductive elastic pad. The elastically deformable conductive elastic pad may be arranged between the heat receiving part and the at least one of the battery cells. An advantage of this embodiment may be that vibrations, e.g. caused by a vehicle that comprises the secondary battery module while driving, are lessened.

At least some or all of the plurality of battery cells may be arranged in a row. The heat dissipation structure may comprise supports. A plurality of the heat dissipation structures may be provided. The supports of two adjacent ones of the heat dissipation structures may face each other. The supports of two adjacent ones of the heat dissipation structures may be arranged in surface contact with each other and/or withe the neighboring ones of the battery cells between the neighboring ones of the battery cells. An advantage of this embodiment may be that the supports keep the battery cells at a distance to each other allowing for cooling air passing between the battery cells.

At least some or all of the plurality of battery cells may be arranged in a row. The heat dissipation structure may be arranged between neighboring ones of the battery cells. The heat dissipation structure may comprise a heat transfer body, e.g. the heat transfer body, in surface contact with the neighboring ones of the battery cells. The heat dissipation structure may form or comprise an air passage. The heat dissipation structure may comprise a heat dissipation fin, e.g. the heat dissipation fin, in the air passage. The heat dissipation fin may be formed integrally with the heat transfer body. An advantage of this embodiment may be that heat is given off more efficiently by the fins which increase the surface area.

The secondary battery module may comprise a cooling fan. The cooling fan may be provided on the inflow passage of the module case. The cooling fan may be configured to blow cooling air into the module case. An advantage of this embodiment may be that forcing air through the module case improves cooling.

The following possible embodiments of the secondary battery pack can be combined as desired.

The secondary battery pack may comprise a blower on the inlet of the pack housing and configured to blow external air into the pack housing. An advantage of this embodiment may be that air reaches the battery cells more easily.

The secondary battery pack may comprise a guide vane in the inlet of the pack housing and configured to guide a flow of air flowing into the pack housing. An advantage of this embodiment may be that air flow is directed to where cooling air is required.

At least selected or each of the heat dissipation structures may comprise a heat receiving part that may be in close contact with a corresponding one of the battery cells and configured to receive heat from the battery cell, and a heat dissipation unit that may be formed integrally with the heat receiving part and configured to heat-exchange with the air passing through the module case. An advantage of this embodiment may be that by integrally providing the heat dissipation unit and the heat receiving part, heat conductions is improved and/or mounting the heat dissipation structure is facilitated.

Aspects and features of the present disclosure are not limited to those described above, and other aspects and features not specifically mentioned herein will be clearly understood by those skilled in the art from the description of the present disclosure below.

### BRIEF DESCRIPTION OF THE DRAWINGS

The above and other aspects and features of the present disclosure will become more apparent to those of ordinary skill in the art by describing embodiments thereof, in detail, with reference to the accompanying drawings, in which:
FIG. 1 is a perspective view of a battery cell to be included in a secondary battery module according to an embodiment of the present disclosure;
FIG. 2 is a cross-sectional view taken along the line A-A in FIG. 1;
FIG. 3 is a schematic illustration of a vehicle to which a secondary battery pack according to an embodiment of the present disclosure is mounted;
FIG. 4 is a plan cross-sectional view illustrating a configuration of the secondary battery module according to an embodiment of the present disclosure;
FIG. 5 illustrates another embodiment of the secondary battery module illustrated in FIG. 4;
FIG. 6 illustrates another embodiment of the secondary battery module illustrated in FIG. 4;
FIG. 7 is a perspective view illustrating a heat dissipation structure illustrated in FIG. 4;
FIG. 8 is a side cross-sectional view of the heat dissipation structure shown in FIG. 7 mounted on a battery cell according to an embodiment of the present disclosure;
FIG. 9 is a side cross-sectional view of another embodiment of the heat dissipation structure illustrated in FIG. 8;
FIG. 10 is a perspective view of the heat dissipation structure shown in FIG. 9;
FIG. 11 is a side cross-sectional view of another embodiment of the heat dissipation structure;
FIG. 12 is a side cross-sectional view of another embodiment of the heat dissipation structure;
FIGS. 13 and 14 are side cross-sectional views of another embodiment of heat dissipation structure;
FIGS. 15 and 16 are side cross-sectional views of another embodiment of the heat dissipation structure;
FIG. 17 is a view illustrating a configuration of a secondary battery pack according to an embodiment of the present disclosure;
FIG. 18 illustrates another embodiment of the secondary battery pack illustrated in FIG. 17; and
FIG. 19 illustrates another embodiment of the secondary battery pack illustrated in FIG. 17.

### DETAILED DESCRIPTION

Hereinafter, embodiments of the present disclosure will be described, in detail, with reference to the accompanying schematic drawings. The terms or words used in the present specification and claims should not be narrowly interpreted according to their general or dictionary meanings but should be interpreted as having meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of patent rules.

References to two compared elements, features, etc. as being "the same" may mean that they are "substantially the same." Thus, the phrase "substantially the same" may include a case having a deviation that is considered low in the art, for example, a deviation of about 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

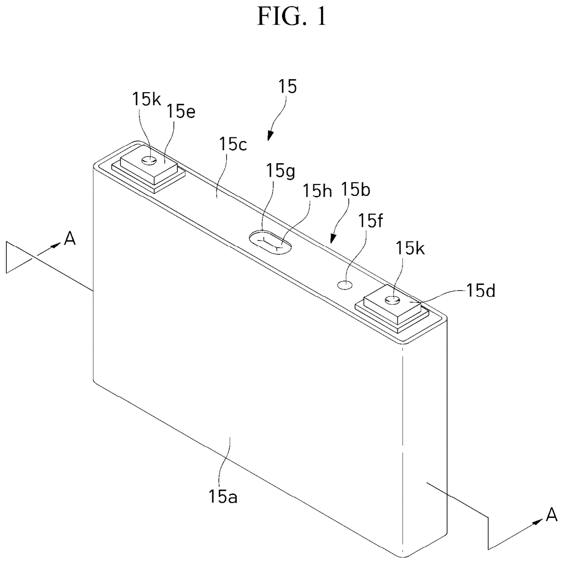

FIG. 1 is a perspective view of a battery cell to be included in a secondary battery module according to an embodiment of the present disclosure.

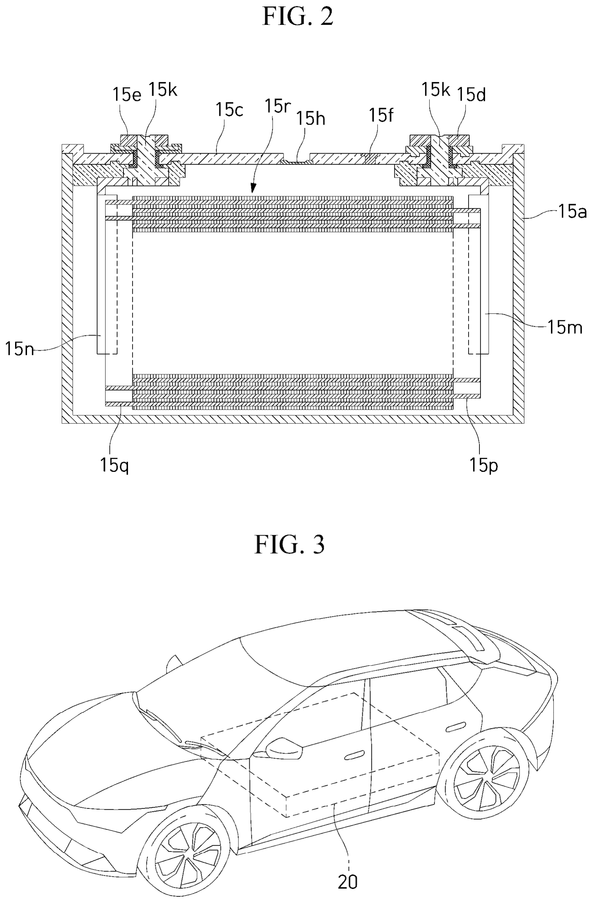

The battery cell 15 includes a case 15a, which forms the overall appearance of the prismatic battery and may be formed of a conductive metal, such as aluminum, an aluminum alloy, or nickel-plated steel. The case 15a may provide (or may form) a space for accommodating an electrode assembly 15r therein (see, e.g., FIG. 2).

The battery cell 15 also includes a cap assembly 15b including a cap plate 15c that covers an opening in the case 15a. In some embodiments, the case 15a and the cap plate 15c may be made of a conductive material (e.g., the same conductive material). A positive electrode terminal 15d and a negative electrode terminal 15e may be electrically connected to positive and negative electrodes, respectively, inside the case 15a and may be installed to protrude outwardly through the cap plate 15c.

The cap plate 15c may have an electrolyte injection port 15f, a gas discharge hole (e.g., a gas discharge opening) 15g, and a vent 15h joined to (e.g., mounted in or on) the gas discharge hole 15g. The vent 15h is configured to open (e.g., to burst) in response to excess gas generated inside the battery to perform a degassing function.

FIG. 2 is a cross-sectional view taken along the line A-A in FIG. 1.

The electrode assembly 15r may be formed by winding or stacking a first electrode plate, a separator, and a second electrode plate, each of which are formed in a plate shape or film shape. When the electrode assembly 15r is a wound type electrode assembly, a winding axis may be parallel to a longitudinal direction of the case 15a. In other embodiments, the electrode assembly 15r is a stack type electrode assembly rather than a winding type, but shape of the electrode assembly 15r is not limited in the present disclosure. For example, the electrode assembly 15r may be a Z-stack electrode assembly in which a positive electrode plate and a negative electrode plate are inserted into both sides of (e.g., opposite sides of) a separator, which is then bent (or folded) into a Z-stack.

In addition, one or more electrode assemblies 15r may be stacked such that long sides of the electrode assemblies are adjacent to each other and accommodated together in the case 15a, and the number of electrode assemblies 15r in the case 15a is not limited in the present disclosure. The first electrode plate of the electrode assembly 15r may act as a negative electrode, and the second electrode plate may act as a positive electrode. Of course, the reverse is also possible.

The first electrode plate may be formed by applying a first electrode active material, such as graphite, carbon, or the like, to a first electrode current collector formed of a metal foil, such as copper, a copper alloy, nickel, a nickel alloy, or the like. The first electrode plate may include a first electrode tab (e.g., a first uncoated portion) 15p, which is a region of the first electrode plate to which the first electrode active material is not applied. The first electrode tab 15p may act as a current flow path between the first electrode plate and a first current collector 15m. In some embodiments, when the first electrode plate is manufactured, the first electrode tab 15p is formed by being cut in advance to protrude to one side of the electrode assembly, or the first electrode tab protrudes to one side of the electrode assembly more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab (e.g., a second uncoated portion) 15q, which is a region of the second electrode plate to which the second electrode active material is not applied. The second electrode tab 15q may act as a current flow path between the second electrode plate and the second current collector 15n. In some embodiments, the second electrode tab 15q may be formed by being cut in advance to protrude to the other side (e.g., the opposite side) of the electrode assembly when the second electrode plate is manufactured, or the second electrode plate may protrude to the other side of the electrode assembly more than (e.g., farther than or beyond) the separator without being separately cut.

In FIG. 2, the first electrode tab 15p and the second electrode tab 15q are illustrated as being positioned on the right side and the left side of the electrode assembly 15r, respectively. However, in other embodiments, both the first electrode tab 15p and the second electrode tab 15q may be positioned together either on the right side or on the left side of the electrode assembly 15r.

Here, the left side and the right side of the electrode assembly 15r are based on the battery as illustrated in FIG. 2 for convenience of explanation. The left side refers to the side of the vertical surface of the electrode assembly 15r to which the second current collector 15n is joined, and the right side refers to the opposite side to which the first current collector 15m is joined. Therefore, the terms "left side" and "right side" of the electrode assembly 15r as used herein may change or may refer to different orientations when the battery is rotated left and right or up and down.

The separator prevents or substantially reduces instances of a short circuit between the first electrode plate and the second electrode plate while allowing movement of lithium ions therebetween. The separator may be made of, for example, a polyethylene film, a polypropylene film, a polyethylene-polypropylene film, or the like.

In some embodiments, an electrode assembly 15r is accommodated in the case 15a along with an electrolyte.

In the electrode assembly 15r, the first current collector 15m and the second current collector 15n may be welded and connected to the first electrode tab 15p extending from the first electrode plate and the second electrode tab 15q extending from the second electrode plate, respectively.

The first current collector 15m and the second current collector 15n are connected to the positive electrode terminal 15d and the negative electrode terminal 15e through connection members 15k, respectively. In some embodiments, the connection members 15k may each have an outer peripheral surface that is threaded and may be fastened to the positive electrode terminal 15d and the negative electrode terminal 15e by screwing. However, the present disclosure is not limited thereto. For example, the connection members 15k may also be coupled to the positive electrode terminal 15d and the negative electrode terminal 15e by riveting or welding.

FIG. 3 is a schematic illustration of a vehicle to which a secondary battery pack according to an embodiment of the present disclosure is mounted.

The secondary battery pack 20 can be manufactured by embedding a plurality of secondary battery modules in a pack housing designed to be mounted on a product (e.g., an end-use product). The pack housing can include fastening parts and electrical connection parts for mounting on a product. In FIG. 3, for convenience of illustration, components including a bus bar, a cooling unit, external terminals for electrically connecting batteries, etc., are not shown. The secondary battery pack 20 may be mounted on (or in) a vehicle. The vehicle may be, for example, an electric vehicle, a hybrid vehicle, or a plug-in hybrid vehicle. The vehicle may be a four-wheeled vehicle or a two-wheeled vehicle but is not limited thereto.

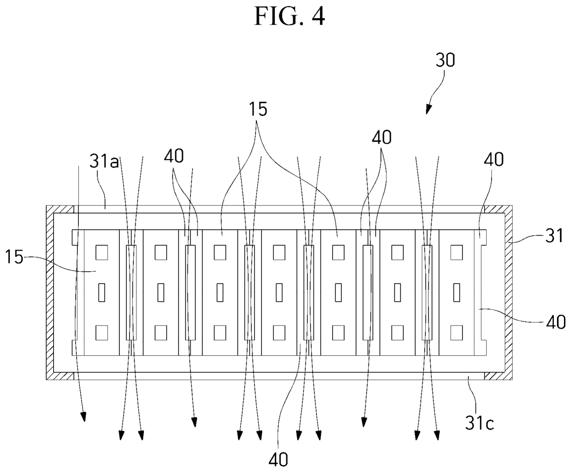

FIG. 4 is a plan cross-sectional view of a secondary battery module 30 according to an embodiment of the present disclosure.

The secondary battery module 30, according the present embodiment, may include a module case 31, a plurality of battery cells 15, and a heat dissipation structure 40. The heat dissipation structure 40 may be a heat dissipation unit. xxx

The module case 31 is a housing for accommodating the battery cells 15 and may have an inflow passage 31a and an outflow passage 31c. The inflow passage 31a may be an air passage along which external air flows into the module case 31 to cool the battery cells 15. In addition, the outflow passage 31c is a passage along which air having heat-exchanged with the battery cells 15 is discharged from the interior the module case 31 to the outside of the module case 31.

The locations, sizes, and numbers of the inflow passage(s) 31a and the outflow passage(s) 31c may be implemented in various ways in various embodiments.

The battery cell 15 may be a prismatic battery cell as described with reference to FIG. 1. However, as long as the heat dissipation structure 40 is in close contact with the battery cell 15, the type of the battery cell 15 is not limited to the prismatic shape. For example, in other embodiments, the battery cell may be a cylindrical or pouch type.

The battery cells 15 may be disposed (or arranged) side-by-side at regular intervals in the module case 31. The battery cells 15 may be connected to a cell control unit and may output power to an external device and/or receive charging power from an external device. When the battery cell 15 is charged and discharged, heat is generated, and the generated heat may be dissipated by the heat dissipation structure 40.

The heat dissipation structure 40 may be a heat exchange medium, which is provided in close contact with the battery cell 15 and cools the battery cell 15 through heat exchange with the air passing through the module case 31. The structure of the heat dissipation structure 40 for dissipating the heat of the battery cell 15 may be implemented in various ways in other embodiments.

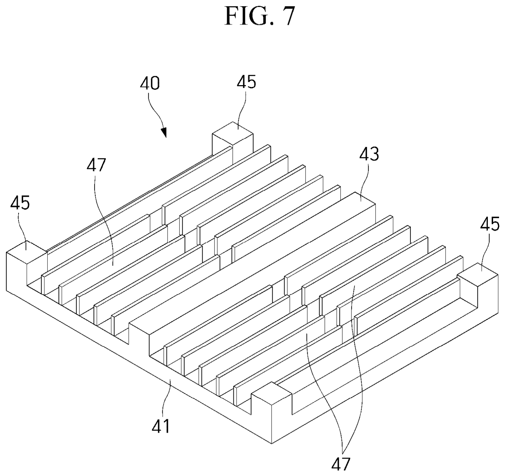

The heat dissipation structure 40 may have a configuration as illustrated in FIG. 7 and may be tightly fixed to side surfaces of the battery cell 15. The size or shape of the heat dissipation structure 40 may be implemented in various ways.

The module case 31 may act as a housing that protects the battery cells 15 and blocks (or separates) the battery cells 15 from an external environment. In addition, the inflow passage 31a and the outflow passage 31c are air passages for heat management inside the module case 31. As described above, the inflow passage 31a is an air passage along which external air flows into the module case. The external air may be cooling air for cooling the battery cell 15.

In addition, heat generated due to the continuous operation of the battery cell 15 may be transferred to the outside through the outflow passage 31c so that a proper temperature of the battery cell 15 may be maintained. In some embodiments, the sizes of the inflow passage 31a and the outflow passage 31c may be the same.

In addition, the battery cells 15 are disposed at regular intervals in the module case 31, and the intervals between the battery cells 15 are designed in consideration of heat management and energy density efficiency. The battery cells 15 may be connected to a cell control unit and charged and discharged, and the heat generated during such an operation may be dissipated by the cooling air.

The heat dissipation structure 40 is in close contact with the battery cell 15 to dissipate heat. As described above, the heat dissipation structure 40 may be directly heat-exchanged with the air passing through the module case 31 to cool the battery cell 15. The heat dissipation structure 40 may be tightly fixed to the side surfaces of the battery cell 15.

FIG. 7 is a perspective view illustrating a configuration of the heat dissipation structure 40 illustrated in FIG. 4. The heat dissipation structure 40 may be a heat sink through which heat of (or generated by) the battery cell 15 is transferred to the outside and may be formed of various types of conductive metals, for example, aluminum or copper.

The heat dissipation structure 40, in the present embodiment, may include a heat receiving part 41, heat dissipation fins 47 as a heat dissipation part, and a support.

The heat receiving part 41 is a plate-shaped portion that is tightly fixed to the side surfaces of the battery cell 15 and may receive (e.g., may absorb) heat from the battery cells 15. An area of the heat receiving part 41 may be the same as an area of a side surface of the battery cell 15. In this description, the "side surface of the battery cell" is a side surface facing a neighboring battery cell from among the battery cells 15 arranged in a row as illustrated in, for example, FIG. 4.

The heat dissipation fin 47 may be formed integrally with one surface of the heat receiving part 41 and may emit heat of the heat receiving part 41 to air. Cooling air introduced through the inflow passage 31a and discharged through the outflow passage 31c may be heat-exchanged with the heat dissipation fins 47. For example, the cooling air cools the heat dissipation fins 47. As illustrated in FIG. 7, the heat dissipation fin 47 is perpendicular to (e.g., protrudes perpendicular to) the heat receiving part 41.

In addition, the support may maintain a separation distance between heat dissipation structures 40 facing each other between the neighboring battery cells 15. For example, the support prevents a decrease in distance between the heat receiving parts 41 when the battery cell 15 slightly expands or swells. The heat dissipation structure 40 also suppresses the swelling of the battery cell 15.

The support includes a central support 43 and an end support 45. The central support 43 is a portion formed integrally with a central portion of the heat receiving part 41 and may have a width and height (e.g., a predetermined width and height). In addition, the end support 45 is a quadrangular protrusion formed integrally with (or at) each of four corners of the heat receiving part 41. The central support 43 and the end support 45 may be located to be coplanar (e.g., may have the same height as each other).

The heat dissipation structures 40 may be installed to face each other between the neighboring battery cells 15. Of course, the heat dissipation structure 40 installed on an outer surface of an outermost battery cell is exposed to the outside.

The heat receiving part 41 is a plate-shaped member that is tightly fixed to the side surface of the battery cell 15 and directly absorbs heat generated in the battery cell 15 and transfers the heat to the heat dissipation fins 47. The area of the heat receiving part 41 may be designed to be the same as the area of the side surface of the battery cell 15. In addition, the heat dissipation fins 47 may be vertically integrated with one surface of the heat receiving part 41 and may contact air flowing on (or flowing along) a main surface. The heat dissipation fins 47 may extend in a direction of the airflow in the module case 31, that is, the flow of the air introduced through the inflow passage 31a and discharged through the outflow passage 31c. The air may be guided by the heat dissipation fins 47 while moving. For example, because the air may be guided by the heat dissipation fins 47 to flow quickly and smoothly, heat generated in the battery cell 15 can be quickly discharged.

The support may maintain a constant distance between the heat dissipation structures 40 between the battery cells 15. The support may maintain a distance between the heat receiving parts 41 even when the battery cell slightly expands (e.g., swells), thereby improving the structural stability.

The support may include the central support 43 located at the central portion and the end supports 45 disposed at the four corners. The central support 43 may support the central portion of the heat receiving part 41, and the end supports 45 may balance the heat dissipating structure at the four corners. By using the support, the heat dissipation structure may maintain a distance between the battery cells 15, prevent deformation of the battery cell 15, and provide the stable heat dissipation environment.

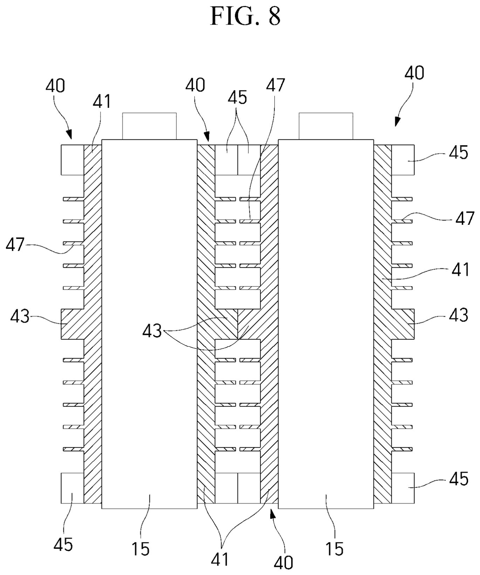

FIG. 8 is a side cross-sectional view of the heat dissipation structure 40 mounted on the battery cell 15 according to an embodiment of the present disclosure.

As illustrated, the central supports 43 and the end supports 45 of a pair of heat dissipation structures 40 facing each other between the battery cells 15 may maintain a state of being in surface contact with each other. For example, the central support 43 of one heat dissipation structure 40 is in surface contact with the central support 43 of the facing heat dissipation structure 40. Similarly, the end supports 45 of the one heat dissipation structure 40 are in surface contact with the end supports 45 of the facing heat dissipation structure 40.

Because the central supports 43 and the end supports 45 are in close contact with the heat dissipation structures 40, the distance between the heat receiving parts 41 does not change (or vary). For example, as long as the heat dissipation structures 40 are mounted, a constant distance between the battery cells 15 is maintained. That is, the distance between the battery cells 15 is not increased or decreased. In addition, the expansion of the battery cell 15 can be suppressed. As long as the heat dissipation structure 40 supports the battery cell 15, swelling of the battery cell 15 does not occur or is restricted.

The structure of the heat dissipation structure 40 may be modified in various ways and descriptions thereof will be provided below.

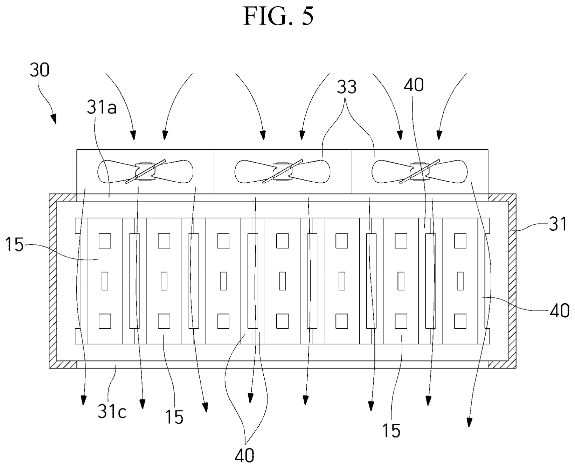

FIG. 5 illustrates another embodiment of the secondary battery module 30 illustrated in FIG. 4.

As illustrated, a plurality of cooling fans 33 may be installed on an outer side of the module case 31. The cooling fans 33 blow cooling air through the inflow passage 31a of the module case 31. For example, the cooling fan 33 injects cooling air into the module case 31. The air flowing into the module case 31 may be discharged through the outflow passage 31c after heat-exchanging with the heat dissipation structure 40.

An amount of air blown by the cooling fans 33 may be adjusted. For example, when the temperature of the battery cell 15 rises rapidly, the amount of air blown by the cooling fans 33 may be increased. In this way, because the cooling fans 33 are configured to adjust the amount of air through the module case 31, cooling management for the battery cell 15 may be more efficiently implemented.

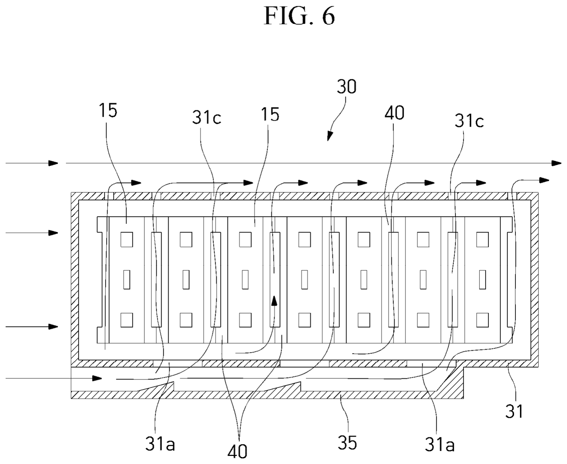

FIG. 6 illustrates another embodiment of the secondary battery module 30 illustrated in FIG. 4. The same reference numerals as the above reference numerals denote the same members having the same functions.

As illustrated in FIG. 6, an air guide 35 may be provided on the outer side of the module case 31 in the secondary battery module 30. The air guide 35 is a duct that covers the inflow passage 31a and may guide air flowing into the air guide 35 toward the inflow passage 31a. The module case 31 having the air guide 35 may be applied when a flow direction of inflow air is perpendicular to the battery cell 15 (e.g., is parallel to a stacking direction of the battery cells 15). The air guide 35 guides some of the air flowing in a direction perpendicular to the battery cell so that the air may be heat-exchanged with the heat dissipation structure 40 while passing through the heat dissipation structure 40.

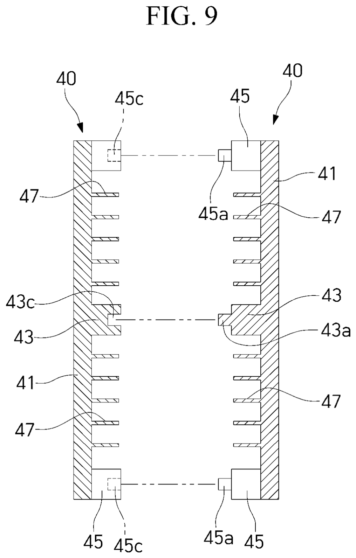

FIG. 9 is a side cross-sectional view of another embodiment of the heat dissipation structure 40 illustrated in FIG. 8.

As illustrated, insertion protrusions 43a and 45a may be formed on the central support 43 and the end supports 45, respectively, of one heat dissipation structure 40. The insertion protrusions 43a and 45a are protrusions formed on the central support 43 and the end support 45, respectively.

In addition, fixing grooves 43c and 45c may be provided in the central support 43 and the end supports 45, respectively, of the other heat dissipation structure 40. The fixing grooves 43c and 45c may accommodate and support the insertion protrusions 43a and 45a, respectively. For example, when the two heat dissipation structures 40 are in close contact with each other while facing each other, the insertion protrusions are fixedly inserted into the fixing grooves to provide a mechanical connection between the two adjacent (or facing) heat dissipation structures 40.

By applying the insertion protrusion and the fixing groove in this way, even when a lateral force is applied to the coupled heat dissipation structures 40, the risk of uncoupling is minimized.

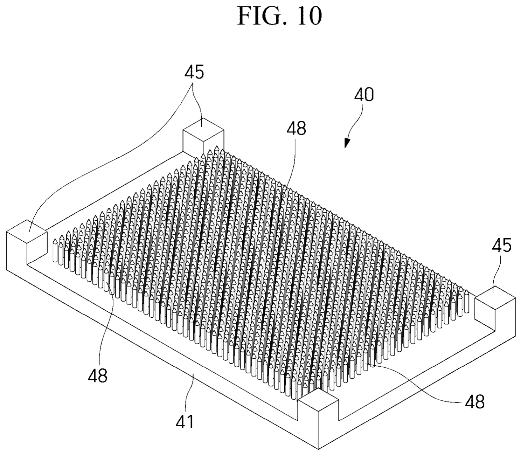

FIG. 10 is a perspective view of the heat dissipation structure 40 according to another embodiment of the present disclosure.

As illustrated in FIG. 10, the heat dissipation structure 40 may include the heat receiving part 41, heat dissipation fins 48, and the end supports 45. The heat receiving part 41 is a plate-shaped member having a thickness and may be in close contact with the side surface of the battery cell 15. The heat receiving part 41 receives heat generated from the battery cell 15 and transfers the heat to the heat dissipation fins 48.

The heat dissipation fin 48 has an acicular (or needle shaped) structure. The heat dissipation fin 48 having the acicular structure has a large area in contact with air. Thus, the heat dissipation fin 48 may sufficiently dissipate the heat of the heat receiving part 41. A total heat dissipation area of the heat dissipation fins 48 illustrated in FIG. 10 may be the same as a total heat dissipation area of the heat dissipation fins 47 illustrated in FIG. 7.

Because the heat dissipation fins 48 having the acicular structure are arranged as a plurality of thin, long fins (or needles), a surface area in contact with air is large and, thus, the heat dissipation effect is high. Such an acicular structure differs from the structure of the heat dissipation fin 47 illustrated in FIG. 7 in that the air flow may be a curved flow as well as a straight flow.

Heat transferred through the heat receiving part 41 is transferred to the heat dissipation fins 48 having the acicular structure and, thus, is smoothly heat-exchanged with air. The length, distance, and arrangement of the heat dissipation fins 48 may be optimized through various changes in design, and the heat dissipation fins 48 may be modified to have a structure which improves the flow of air and further increases a heat dissipation rate.

As a result, the heat dissipation structure shown in FIG. 10 may use the acicular heat dissipation fins so that air may flow in various directions, thereby efficiently dissipating heat of the battery cell.

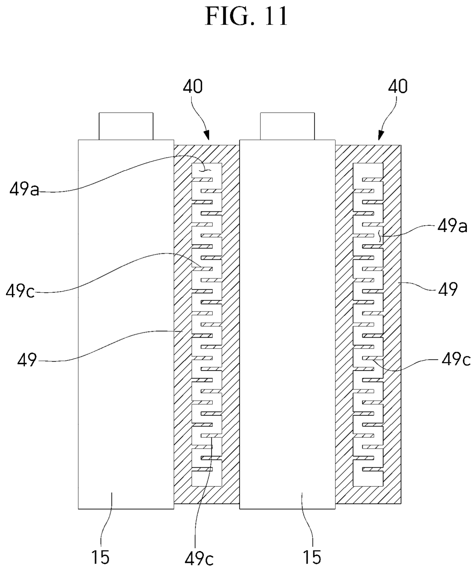

FIG. 11 is a side cross-sectional view of another embodiment of the heat dissipation structure 40.

As illustrated in FIG. 11, the heat dissipation structure 40 may include a heat transfer body 49 and heat dissipation fins 49c. The heat transfer body 49 is a member that is in surface contact with two battery cells 15 and provides an air passage 49a therein (or therebetween). Air introduced into the module case 31 through the inflow passage 31a may be discharged to the outside of the module case 31 through the air passage 49a in the heat transfer body 49.

The heat dissipation fins 49c are located in the air passage 49a and are formed integrally with the heat transfer body 49. The heat dissipation fins 49c may radiate heat transferred from the heat transfer body 49 to the air. Heat dissipation from the battery cell 15 may be achieved by the heat transfer body 49 and the heat dissipation fins 49c.

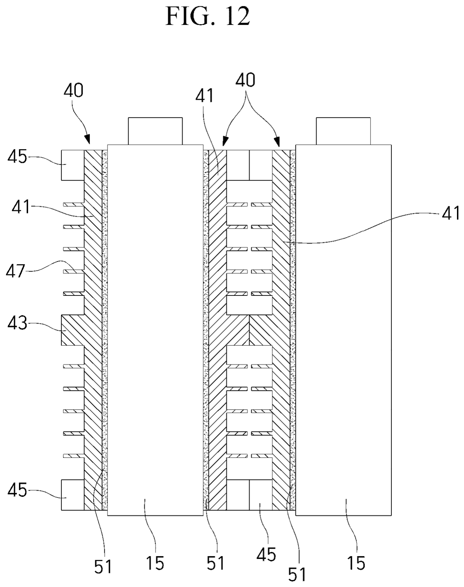

FIG. 12 is a side cross-sectional view of another embodiment of the heat dissipation structure 40.

As illustrated, conductive elastic pads 51 may be provided between each pair of the heat dissipation structure 40 and the battery cell 15. The conductive elastic pad 51 has both conductivity (e.g., thermal conductivity) and adhesiveness. The heat dissipation structure 40 may be fixed to the side surface of the battery cell 15 through the conductive elastic pad 51 in an adhesive manner. Heat generated in each battery cell 15 may be transferred to the heat dissipation structure 40 and dissipated.

In addition, the conductive elastic pad 51 may be elastically deformed and has buffering capability. Accordingly, even when external vibration or impact is applied to the module case 31, vibration or impact energy may be absorbed or substantially absorbed by the conductive elastic pad 51. The heat dissipation structure 40 is not separated from the battery cell 15 even when there is vibration.

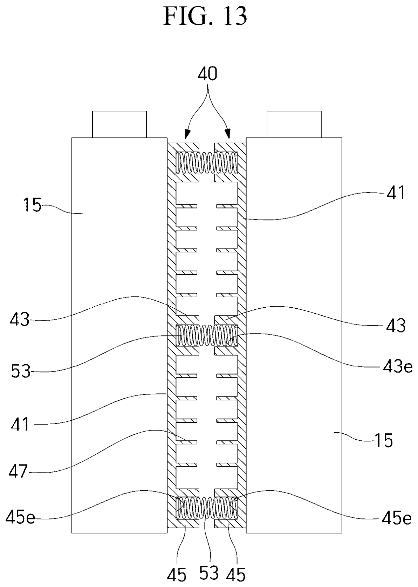

The secondary battery module 30, according to the present embodiment, may further include an elastic support which presses the heat dissipation structure 40 toward the battery cell 15. The elastic support may elastically press the heat dissipation structure 40 toward the battery cell so that the heat dissipation structure 40 may be elastically in close contact with the battery cell 15. The elastic support may be a spring 53 (see, e.g., FIG. 13).

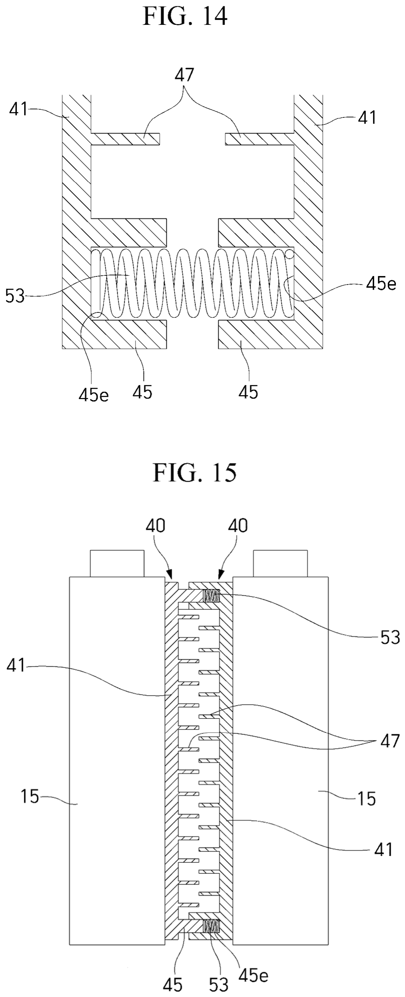

FIGS. 13 and 14 are side cross-sectional views of an embodiment in which a spring as used as an elastic support applied to the heat dissipation structure according to an embodiment of the present disclosure. FIG. 14 is an enlarged view of a part of FIG. 13.

As illustrated, spring grooves 43e and 45e may be formed in the central support 43 and the end support 45 facing each other, respectively, and end portions of the spring 53 may be inserted into the spring grooves 43e and 45e. The spring 53 is a compression coil spring and elastically presses the heat dissipation structures 40 in opposite directions. The two heat dissipation structures 40 are elastically pressed toward the battery cell 15 by the springs 53.

Because the heat dissipation structure 40 is in elastic contact with the battery cell 15, even when external vibration or impact energy is applied, the heat dissipation structure 40 is not separated from the battery cell 15. The heat dissipation structure of the battery cell 15 can be stably maintained.

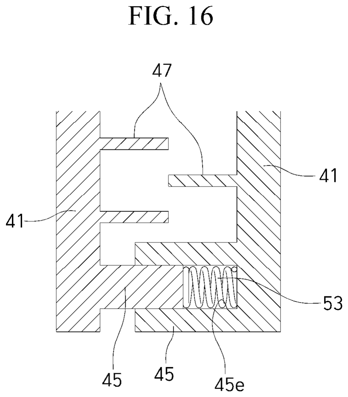

FIGS. 15 and 16 are side cross-sectional views of another embodiment of the heat dissipation structure 40. FIG. 16 is an enlarged view of a part of FIG. 15.

As illustrated, the spring groove 45e may be provided in one heat dissipation structure 40, and the spring 53 may be embedded in the spring groove 45e. In addition, the end support 45 of the other heat dissipation structure 40 presses the spring 53, which is inserted into the spring groove 45e. Because the battery cell 15 is mounted in the module case 31, a distance between the battery cells 15 is not increased. A pair of heat dissipation structures 40 facing each other may be elastically supported toward the battery cell 15 by the spring 53.

Because the heat dissipation structure 40 is elastically pressed toward the battery cell 15 by the spring, as described above with reference to FIG. 13, even when external vibration or collision energy is applied, the heat dissipation structure 40 is not separated because the vibration or collision energy is absorbed by the spring 53.

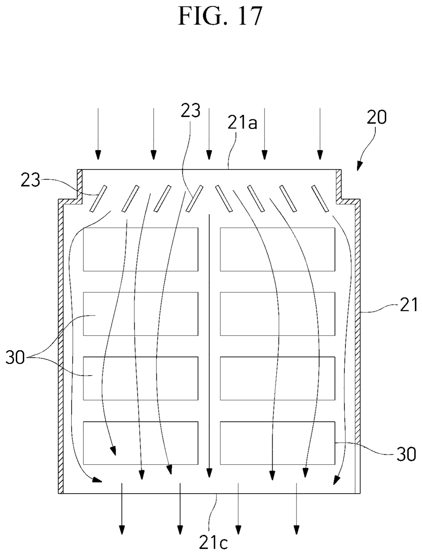

FIG. 17 illustrates a configuration of a secondary battery pack 20 according to an embodiment of the present disclosure.

As illustrated, the secondary battery pack 20, according to the present embodiment, may include a pack housing 21 and a plurality of secondary battery modules 30. The pack housing 21 is a case which accommodates the secondary battery module 30 and may have an inlet 21a and an outlet 21c. Air outside the pack housing 21 may be introduced into the pack housing 21 through the inlet 21a and then discharged through the outlet 21c.

Air introduced through the inlet 21a may cool the secondary battery module 30 while passing through the pack housing 21. For example, the air passes through the module case 31 of each secondary battery module 30 and transfers the cool air to the battery cells 15 inside the module cases 31.

For example, a guide vane 23 may be provided in the inlet 21a. The guide vane 23 guides the flow of air flowing into the pack housing 21 and widely spreads air. By widely spreading the air, cooling air may evenly flow through the pack housing 21 and into the module cases 31.

Air introduced through the inlet 21a may cool each secondary battery module 30 and then may be discharged through the outlet 21c.

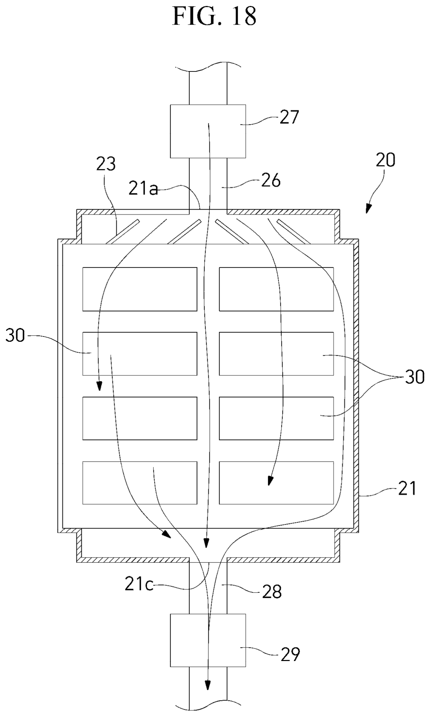

FIG. 18 illustrates another embodiment of the secondary battery pack 20 illustrated in FIG. 17.

As illustrated, an induction duct 26 may be connected to the inlet 21a of the secondary battery pack 20. In addition, a blower 27 may be mounted on the induction duct 26. The blower 27 may pull external air and blow the air into the induction duct 26. The air blown through the blower 27 may enter the pack housing 21 through the induction duct 26, may be widely spread by the guide vane 23, and then may move toward the outlet 21c. While the air moves toward the outlet 21c, the air passes through the secondary battery modules 30 and cools the battery cells 15 as described above.

In addition, an exhaust duct 28 may be installed on the outlet 21c. The exhaust duct 28 is a passage through which the air which has passed through the pack housing 21 is discharged. In addition, an exhaust fan 29 may be mounted on the exhaust duct 28. The exhaust fan 29 exhausts (e.g., pulls) internal air of the pack housing 21 to the outside. By driving the exhaust fan 29, air does not stagnate inside the pack housing 21.

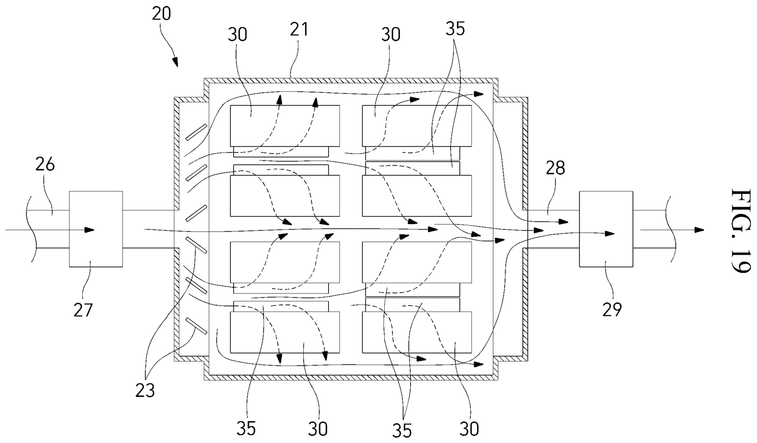

FIG. 19 is a diagram illustrating another embodiment of the secondary battery pack 20.

As illustrated in FIG. 19, the secondary battery modules 30, which are the same as that illustrated in FIG. 6 but are not limited thereto, may be installed in the pack housing 21 of the secondary battery pack 20 shown in FIG. 18. External air supplied through the blower 27 may cool the secondary battery modules 30 while passing through the pack housing 21 and may be discharged through the exhaust duct 28.

A secondary battery module according to embodiments of the present disclosure allows cooling air to pass through the inside of a module and all battery cells are simultaneously cooled by the cooling air, thereby improving cooling efficiency.

In addition, the secondary battery module according to embodiments of the present disclosure allows for a lightweight structure and equipment installation and maintenance costs are low compared to a water-cooling method.

Although the present disclosure has been described above with respect to embodiments thereof, the present disclosure is not limited thereto.

## Claims

1. A heat dissipation structure (40) for a secondary battery module (30), the heat dissipation structure (40) comprising:
a heat receiving part (41) adapted to be in close contact with a battery cell (15) inside a module case (31) forming a secondary battery module (30), the heat receiving part (41) being configured to receive heat of the battery cell (15); and
a heat dissipation unit formed integrally with the heat receiving part (41) and configured to radiate heat from the heat receiving part (41) to air.

2. The heat dissipation structure (40) as claimed in claim 1, wherein the heat dissipation structure (40) comprises a support (43, 45) configured to be in surface contact with a support (43, 45) of an adjacent heat dissipation structure (40).

3. The heat dissipation structure (40) as claimed in claim 1 or 2, wherein an elastically deformable conductive elastic pad (51) is provided on a side of the heat receiving part (41) that faces away from the heat dissipation unit.

4. The heat dissipation structure (40) as claimed in any of claims 1 to 3, further comprising an elastic support (53) arranged on a side of the heat receiving part (41) that faces away from the heat receiving part (41).

5. The heat dissipation structure (40) as claimed in any of claims 1 to 4, wherein the heat receiving part (41) has a heat transfer body (49) configured to be brought in contact with neighboring ones of the battery cells (15) and provided with aa air passage (49a) configured to allow air to pass therethrough.

6. The heat dissipation structure (40) as claimed in claim 5, wherein the heat dissipation unit has a heat dissipation fin (49c) inside the air passage (49a) and configured to receive heat of the heat receiving part (41) to give off the heat to air.

7. A secondary battery module (30) comprising:
a module case (31) having an inflow passage (31a) and an outflow passage (31c) configured to allow air to pass therethrough;
a plurality of battery cells (15) in the module case (31); and
a heat dissipation structure (40) in close contact with at least one of the battery cells (15) and configured to cool the at least one of the battery cells (15) through heat exchange with the air passing through the module case (31), wherein the heat dissipation structure (40) is the heat dissipation structure (40) of any of the previous claims.

8. The secondary battery module (30) as claimed in claim 7, wherein the heat receiving part (41) is arranged in close contact with the at least one of the battery cells (15) and is configured to receive heat from the at least one of the battery cells (15); and
the heat dissipation unit is configured to heat-exchange with the air passing through the module case (31).

9. The secondary battery module (30) as claimed in claim 8, wherein the elastically deformable conductive elastic pad (51) is arranged between the heat receiving part (41) and the at least one of the battery cells (15).

10. The secondary battery module (30) as claimed in claim 8 or 9, wherein the plurality of battery cells (15) are arranged in a row,
wherein a plurality of the heat dissipation structures (40) is provided, and
wherein the supports (43, 45) of two adjacent ones of the heat dissipation structures (40) face each other and are in surface contact with each other between neighboring ones of the battery cells (15).

11. The secondary battery module (30) as claimed in any of claims 7 to 10, wherein the plurality of battery cells (15) are arranged in a row, and
wherein the heat dissipation structure (40) is arranged between neighboring ones of the battery cells (15),
the heat transfer body (49) is in surface contact with the neighboring ones of the battery cells (15).

12. The secondary battery module (30) as claimed in any of claims 7 to 11 further comprising a cooling fan (33) on the inflow passage (31a) of the module case (31) and configured to blow cooling air into the module case (31).

13. A secondary battery pack (20) comprising:
a pack housing (21) having an inlet (21a) and an outlet (21c); and
a secondary battery module (30), wherein the secondary battery module (30) is the secondary battery module (30) of any of claims 7 to 12.

14. The secondary battery pack (20) as claimed in claim 13, further comprising a blower (27) on the inlet (21a) of the pack housing (21) and configured to blow external air into the pack housing (21).

15. The secondary battery pack (20) as claimed in claim 13 or 14, further comprising a guide vane (23) in the inlet (21a) of the pack housing (21) and configured to guide a flow of air flowing into the pack housing (21).
